# FASCICULE DE BREVET EUROPEEN

(11) **EP 2 704 913 B1**
(45) Date de publication et mention de la délivrance du brevet: **31.05.2017**
(21) Numéro de dépôt: 12722453.3
(22) Date de dépôt: 20.04.2012
(51) Int. Cl.: B60H 1/00

(54) **PROCEDE DE REGULATION DE LA TEMPERATURE INTERIEURE DE L'HABITACLE D'UN VEHICULE AUTOMOBILE, ET SYSTEME DE CLIMATISATION ASSOCIE**
VERFAHREN ZUR REGELUNG DER TEMPERATUR DES INNENRAUMES EINES KRAFTFAHRZEUGES UND ZUGEHÖRIGE KLIMAANLAGE
METHOD FOR REGULATING THE TEMPERATURE OF THE INTERIOR OF A MOTOR VEHICLE, AND ASSOCIATED AIR-CONDITIONING SYSTEM

(30) Priorité: 05.05.2011 FR 1153869
(43) Date de publication de la demande: 12.03.2014
(73) Titulaire: Renault S.A.S., 92100 Boulogne-Billancourt (FR)
(72) Inventeur: DENIAUD, Nicolas, F-78180 Montigny le Bretonneux (FR); RIPOLL, Christophe, F-78460 Chevreuse (FR)
(86) Numéro de dépôt international: PCT/FR2012/050872
(87) Numéro de publication internationale: WO 2013/001187

(56) Documents cités:
- DE-A1-102009 029 991
- FR-A3- 2 690 652
- US-A1- 2010 019 050

## Description

L'invention concerne la climatisation de l'habitacle d'un véhicule automobile, et plus particulièrement la régulation de la température d'air soufflé dans l'habitacle, comme divulgué par DE 10 2009 029 991 A1.

L'habitacle d'un véhicule automobile représente un volume clos et réduit, soumis à un environnement changeant et parfois rigoureux dans lequel il est indispensable de renouveler régulièrement l'air et de réguler la température. La température intérieure de l'habitacle d'un véhicule automobile peut être régulée à partir de la température du flux d'air soufflé par un système de climatisation.

Un système de climatisation, également appelé en anglais « Heating Ventilation and Air-Conditioning system » (HVAC), comprend généralement au moins une soufflante couplée à des systèmes de chauffage et/ou de refroidissement de l'air. Le système de climatisation délivre l'air soufflé dans l'habitacle du véhicule automobile via les conduits d'air couplés à des volets de mixage. Les volets de mixage permettent de délivrer l'air soufflé à différentes zones de l'habitacle. De plus, ils peuvent être pilotés de manière à délivrer une température ou une quantité d'air soufflé différente selon les zones de l'habitacle.

Dans l'habitacle d'un véhicule automobile, la température peut varier selon les conditions extérieures et les matériaux utilisés dans l'habitacle du véhicule automobile. En été par exemple, les éléments de l'habitacle du véhicule peuvent emmagasiner de l'énergie calorifique de part l'ensoleillement reçu.

Le flux d'énergie rayonnante solaire ainsi que les autres flux d'énergies thermiques transmis dans l'habitacle (par conduction et par convection) sont absorbés par l'ensemble des matières (sièges, habillage, planche de bord, etc.) se trouvant dans l'habitacle. Les objets et les surfaces d'échange internes absorbent de la chaleur et s'échauffent. A leur tour, ces corps rayonnent une certaine quantité de chaleur avec des longueurs d'onde supérieure à 5 µm, c'est-à-dire situées principalement dans l'infrarouge lointain. Or les vitrages, même clairs, se comportent comme un milieu opaque aux rayonnements ayant une longueur d'onde supérieure à 5 µm. La chaleur secondaire ainsi générée s'accumule donc, « piégée » à l'intérieur de l'habitacle.

L'effet de serre qui se produit alors peut être avantageux en hiver mais défavorable en été. En été, le processus de « chambrage » d'un véhicule consiste à garer celui-ci au soleil avec ses portes et fenêtres fermées et le soumettre aux contraintes climatiques extérieures d'ensoleillement direct, à une température ambiante (environ 35°C) pendant une durée de temps donnée (une à deux heures). Pendant ce temps, l'habitacle s'échauffe et la température intérieure dans l'habitacle va monter progressivement par l'effet de serre, jusqu'à atteindre 60°C, voire plus. La vitesse d'échauffement dépend, entre autres, principalement, de la nature du vitrage (clair ou teinté) qui contribue, de manière non négligeable, par l'effet de serre.

Les systèmes de climatisation comprennent des moyens de régulation connus permettant de réguler la température de l'air soufflé dans plusieurs zones de l'habitacle. Les moyens de régulation utilisent généralement un capteur de température intérieure et un estimateur de température de confort ressentie par le conducteur. L'estimateur a pour but d'établir une température de confort ressentie par le conducteur à partir d'une correction de la température intérieure mesurée par le capteur. Les moyens de régulation peuvent ainsi réaliser une régulation par rapport à la température de confort ressentie par le conducteur et la consigne de température choisie par le conducteur.

Cette température de confort est utilisée dans une boucle d'asservissement de la température de confort agissant sur la commande du volet de mixage. Pour cela, la différence entre la consigne de température de confort et la température de confort estimée est calculée, et la position du volet de mixage est déterminée par un régulateur de type PID et appliquée afin d'annuler la différence de température calculée.

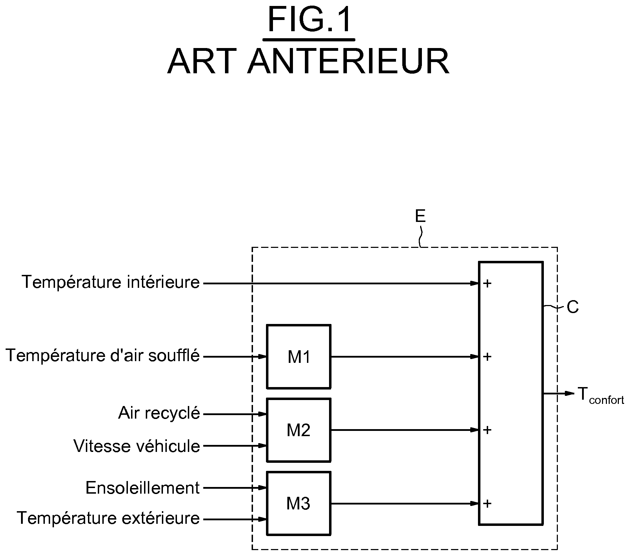

Il est connu d'estimer la température de confort en fonction de l'ensoleillement en utilisant un estimateur illustré sur la figure 1. L'estimateur E reçoit en entrée la température intérieure mesurée à l'aide d'une sonde de température montée à l'intérieur de l'habitacle, les températures d'air soufflé dans différentes zones de l'habitacle du véhicule automobile, la vitesse du véhicule, la température et la quantité d'air recyclé. Il reçoit également en entrée la température extérieure mesurée par un capteur de température disposé sur la carrosserie du véhicule automobile, et l'ensoleillement mesuré à partir d'un capteur photovoltaïque également monté sur la carrosserie du véhicule automobile.

L'estimateur E comprend des modules de correction M1, M2, M3 et un module C de compilation des valeurs. Le premier module de correction M1 réalise un calcul de la température moyenne d'air soufflé à partir du calcul d'une moyenne pondérée des valeurs de températures d'air soufflées reçues pour les différentes zones. Le second module M2 détermine une température représentative de l'air recyclé à partir de la température et de la quantité d'air recyclé corrigée d'un facteur fonction de la vitesse du véhicule. Le troisième module M3 détermine une température externe relative à la température extérieure corrigée de l'ensoleillement extérieur mesuré. Le module C de compilation détermine alors une température de confort *T_{confort}* ressentie par l'utilisateur à partir de la température intérieure mesurée, et des températures délivrées par les trois modules M1, M2 et M3.

Cependant, dans un tel estimateur, la correction de la température de confort, *T_{confort},* par rapport à l'ensoleillement n'est appliquée que lorsque la mesure de l'ensoleillement apparaît (à une constante de temps près si celle-ci est filtrée). Par conséquent, même à un niveau de chambrage faible, c'est-à-dire avec une petite quantité d'énergie calorifique accumulée dans l'habitacle, l'offset de correction est appliqué. C'est le cas, par exemple, d'un véhicule automobile sortant d'un parking couvert, et arrivant sous un fort ensoleillement. Il en résulte alors une surchauffe importante de la température de ventilation, le système calculant une température de confort, *T_{confort},* ressentie par l'utilisateur moins élevée que la réalité. En effet, la température intérieure brute de la sonde de température est moins élevée que la température intérieure brute d'un véhicule chambré, c'est-à-dire ayant accumulé beaucoup d'énergie calorifique dans l'habitacle. La correction d'offset s'applique donc sur une température moins élevée que celle utilisée pour la mise au point de la table de correction utilisée par le troisième module M3.

Il est connu d'appliquer un filtre long sur le module de correction M3 permettant la prise en compte de la mesure d'ensoleillement, de manière à filtrer la correction dans le temps. Cependant, ce filtre n'est pas fonction du niveau de chambrage, c'est-à-dire de la quantité d'énergie calorifique emmagasinée dans l'habitacle. De plus, le filtre étant un filtre long, il nécessite, en termes de codage, des moyens comprenant un espace de codage important.

L'invention propose de pallier les inconvénients mentionnés en proposant des moyens de régulation d'un système de climatisation comportant des moyens d'estimation de la température de confort ressentie par l'utilisateur tenant compte de l'ensoleillement extérieur ayant une bonne précision de régulation même lors d'un changement d'environnement soudain et une taille de codage réduit. Le changement d'environnement soudain peut par exemple être la sortie d'un garage d'un véhicule automobile débouchant sur un roulage en environnement extérieure sous un fort ensoleillement.

Selon un aspect, il est proposé, dans un mode de réalisation, un système de climatisation de l'habitacle d'un véhicule automobile, comprenant au moins une soufflante pour entraîner un flux d'air chaud ou froid dans plusieurs zones distinctes de l'habitacle, des éléments de répartition du flux d'air dans lesdites zones, et des moyens de régulation de la température d'air dans chacune desdites zones, les moyens de régulation comportant une sonde de température apte à mesurer une température intérieure de l'habitacle, des moyens d'estimation d'une température de confort ressentie par le conducteur, des moyens utilisateur permettant à l'utilisateur d'émettre une consigne de température de confort, et des moyens de détermination des commandes des éléments de répartition du flux d'air.

Selon une caractéristique générale, les moyens d'estimation d'une température de confort comportent un module d'évaluation de l'énergie calorifique accumulée dans l'habitacle du véhicule automobile pendant une période de stationnement.

Les moyens d'estimation prennent ainsi compte du niveau de chambrage du véhicule automobile pour déterminer avec précision la température de confort ressentie par l'utilisateur.

Le module d'évaluation peut avantageusement comporter un soustracteur déterminant la différence entre une mesure de la température extérieure au véhicule et la mesure de la température intérieure de l'habitacle.Selon l'invention, les moyens d'estimation d'une température de confort comprennent un module de correction apte à déterminer une valeur de la température extérieure au véhicule corrigée en fonction de l'ensoleillement mesuré, un module de compensation apte à déterminer un facteur de compensation de ladite température extérieure corrigée en fonction de l'évaluation de l'énergie calorifique accumulée et de l'ensoleillement mesuré, et un module de détermination de la température extérieure corrigée compensée à partir dudit facteur de compensation et de la température extérieure corrigée.

Le système de climatisation comprend préférentiellement un ensemble de détermination avec au moins des moyens de mesure de la température d'air soufflés, des moyens de mesure de la quantité d'air recyclé, des moyens de mesure de la vitesse du véhicule, des moyens de mesure de l'ensoleillement, et/ou des moyens de mesures de la température extérieure.

Avantageusement le système de climatisation peut comprendre un module de correction de la température d'air soufflé et un module de correction statique de la température d'air recyclé en fonction de la vitesse du véhicule automobile.

Selon un autre aspect, il est proposé, dans un mode de mise en oeuvre, un procédé de régulation de la température intérieure de l'habitacle d'un véhicule automobile, comprenant la mesure d'une température intérieure de l'habitacle, l'estimation d'une température de confort ressentie par le conducteur, la réception d'une consigne de température de confort et la régulation de la température d'air soufflé dans l'habitacle.

Selon une caractéristique générale, pour estimer la température de confort on évalue l'énergie calorifique accumulée dans l'habitacle du véhicule automobile pendant une période de stationnement.

Avantageusement, l'énergie calorifique accumulée peut être évaluée à partir de la différence entre une mesure de la température extérieure au véhicule et la mesure de la température intérieure de l'habitacle.

Selon l'invention, pour estimer la température de confort, on détermine une valeur de la température extérieure au véhicule corrigée en fonction de l'ensoleillement mesuré, on détermine un facteur de compensation de la température extérieure corrigée en fonction de l'évaluation de l'énergie calorifique accumulée et de l'ensoleillement mesuré, on détermine une température extérieure corrigée compensée à partir dudit facteur de compensation et de la température extérieure corrigée.

La température de confort est préférentiellement estimée à partir de la température intérieure de l'habitacle et d'au moins un paramètre supplémentaire.

Avantageusement, le paramètre supplémentaire peut comprendre la température d'air soufflé, la vitesse du véhicule, la quantité d'air recyclé, la température extérieure au véhicule, et/ou l'ensoleillement.

D'autres avantages et caractéristiques de l'invention apparaîtront à l'examen de la description détaillée de modes de mise en oeuvre et de modes de réalisation, nullement limitatifs, et des dessins annexés, sur lesquels :
- la figure 1, déjà décrite, présente un estimateur de température de confort ressentie par l'utilisateur selon l'état de l' art ;
- la figure 2 présente de manière schématique un exemple de système de climatisation d'un véhicule automobile selon un mode de réalisation ;
- la figure 3 représente de manière schématique des moyens de régulation du système de climatisation de la figure 2 ;
- la figure 4 représente de manière schématique des moyens d'estimation de la température de confort des moyens de régulation de la figure 3 ;
- la figure 5 illustre un exemple d'étapes de procédé de régulation de la température intérieure de l'habitacle d'un véhicule automobile, selon un mode de mise en oeuvre.

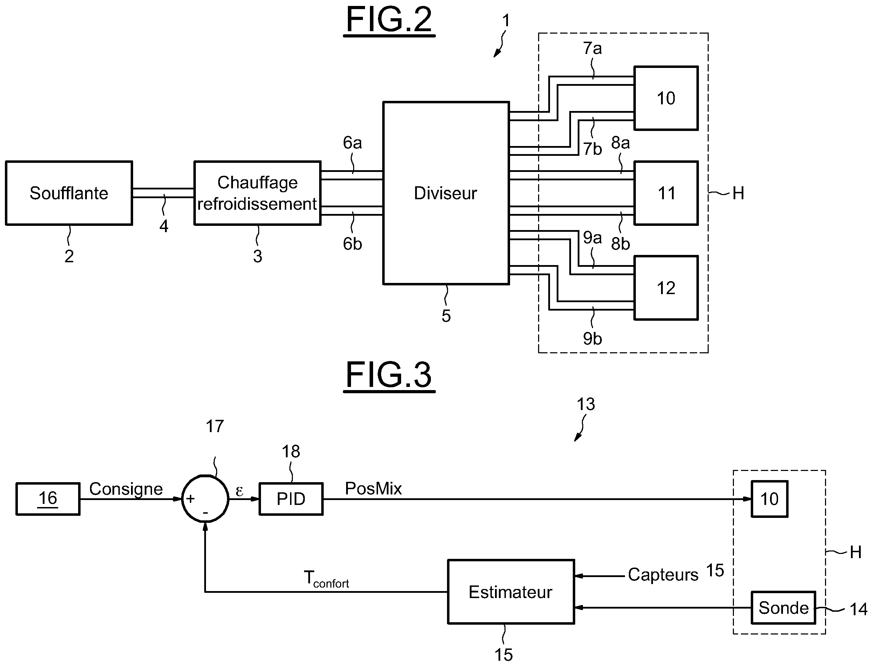

Sur la figure 2 est représenté schématiquement un système de climatisation 1 d'un véhicule automobile selon un mode de réalisation.

Le système de climatisation 1 comprend au moins une soufflante 2 permettant de générer un flux d'air vers des moyens 3 de chauffage et/ou de refroidissement couplés à la soufflante 1 par un conduit primaire 4. Le système de climatisation 1 comprend également des moyens 5 de division du flux d'air couplés aux moyens 3 de chauffage et/ou refroidissement par un conduit secondaire d'air frais 6a et un conduit secondaire d'air chaud 6b. Les moyens 5 de division permettent de séparer les flux secondaires d'air chaud et frais des conduits secondaires 6a et 6b, en plusieurs flux tertiaires d'air chaud et frais circulant dans des conduits d'air frais 7a, 8a et 9a, respectivement associés à des conduits tertiaires d'air chaud 7b, 8b et 9b. Le système de climatisation 1 comprend autant de paires de conduits tertiaires d'air chaud et frais 7a et 7b, 8a et 8b, 9a et 9b qu'il y a de zones à climatiser dans l'habitacle du véhicule automobile.

Chaque paire de conduits tertiaires d'air chaud et frais 7a et 7b, 8a et 8b, 9a et 9b est respectivement couplée à un volet de mixage, dans cet exemple trois volets de mixage 10, 11 et 12 ont été représentés. Un volet de mixage 10 à 12 permet délivrer de l'air soufflé dans une zone de l'habitacle tout en régulant la température de l'air soufflé en faisant varier la proportion d'air frais par rapport à l'air chaud. Pour réguler la température de l'air soufflé au travers d'un volet de mixage 10 à 12, chaque volet de mixage 10 à 12 est couplé à des moyens de régulation 13 de la température.

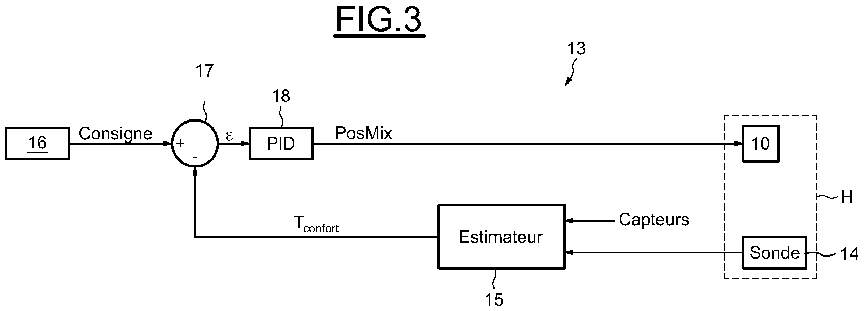

Sur la figure 3 sont représentés de manière schématique des moyens de régulation 13 du système de climatisation 1 de la figure 2.

Les moyens de régulation 13 sont capables de réguler une température de confort, *T_{confort}*, ressentie par l'utilisateur, par exemple le conducteur, dans l'habitacle H du véhicule automobile. Ils comprennent une sonde de température 14 apte à mesurer une température intérieure de l'habitacle H. La sonde de température 14 peut, par exemple, être montée sur le rétroviseur intérieur du véhicule automobile.

Les moyens de régulation 13 comprennent aussi un estimateur 15 de la température de confort, *T_{confort}*, ressentie par l'utilisateur et une commande 16 permettant à l'utilisateur d'émettre une consigne de température de confort, *Consigne.* La commande 16 et l'estimateur 15 sont couplés en entrée d'un soustracteur 17 dont la sortie est couplée à un régulateur 18.

Le soustracteur 17 calcule la différence ε entre la consigne de température de confort, *Consigne,* souhaitée par l'utilisateur et la température de confort ressentie par l'utilisateur, *T_{confort}*, estimée par l'estimateur 15. La différence ε ainsi calculée par le soustracteur 17 est délivrée au régulateur 18, par exemple de type proportionnel intégral dérivé. Le régulateur 18 est configuré de manière à déduire de la différence ε, la position d'un volet de mixage. Le régulateur 18 délivre ainsi en sortie un signal de commande *PosMix* de la position du volet de mixage. Les moyens de régulation 13 peuvent également comprendre des moyens permettant de déterminer des signaux de commande de la position d'autres volets de mixage.

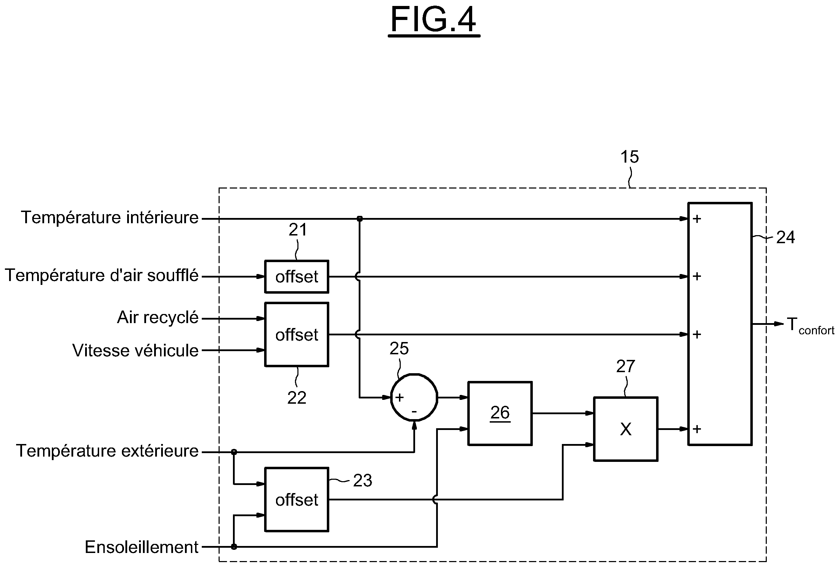

La figure 4 présente schématiquement les moyens d'estimation 15 compris dans les moyens de régulation 13 de la figure 3.

Les moyens d'estimation 15 reçoivent en entrée la température intérieure mesurée à l'aide de la sonde de température 14 positionnée sur le rétroviseur intérieur, les températures d'air soufflé dans différentes zones de l'habitacle du véhicule automobile, la vitesse du véhicule, ainsi que la température et la quantité d'air recyclé. Ils reçoivent également la température extérieure mesurée par un capteur de température monté sur la carrosserie du véhicule automobile, et l'ensoleillement mesuré à partir d'un capteur photovoltaïque également monté sur la carrosserie du véhicule automobile.

Les moyens d'estimation 15 comprennent trois modules de correction 21, 22 et 23 et un module 24 de détermination de la température de confort, *T_{confort}*. Le premier module de correction 21 reçoit en entrée les températures d'air soufflé dans les différentes zones de l'habitacle. Ces températures peuvent être mesurées par des sondes de températures montées, par exemple, sur les éléments 10 à 12 de répartition du flux d'air. Le premier module de correction 21 délivre en sortie une température moyenne d'air soufflé calculée à partir d'une moyenne pondérée des valeurs de températures d'air soufflé reçues pour les différentes zones.

Le second module de correction 22 reçoit en entrée, d'une part, la température et la quantité d'air recyclé, et, d'autre part, la vitesse du véhicule. A partir de ces deux variables d'entrée, le second module de correction 22 détermine une valeur de la température d'air recyclé corrigée en fonction de la vitesse du véhicule.

Le troisième module de correction 23 reçoit en entrée la température extérieure et la puissance de l'ensoleillement extérieure mesurée par un capteur photovoltaïque par exemple. Le troisième module de correction 23 détermine alors la valeur de la température extérieure corrigée en fonction de la puissance de l'ensoleillement extérieur mesuré.

Les moyens d'estimation 15 comprennent également un soustracteur 25 recevant sur une entrée additive la température intérieure, et sur une entrée soustractive la température extérieure. Le soustracteur 25 délivre en sortie le niveau de chambrage correspondant à la différence entre la température intérieure mesurée et la température extérieure mesurée. Le niveau de chambrage reflète ainsi la quantité d'énergie accumulée dans l'habitacle pendant le stationnement. Le niveau de chambrage est ensuite délivré à un module de compensation 26 qui reçoit également en entrée l'ensoleillement extérieur.

A partir du niveau de chambrage et de la puissance de l'ensoleillement mesuré, le module de compensation 26 détermine un facteur de compensation de la température extérieure corrigée délivrée par le troisième module de correction 23. Le facteur de compensation est délivré par le module de compensation 26 à un multiplicateur 27 recevant également en entrée la température extérieure corrigée délivrée par le troisième module de correction 23.

Le multiplicateur 27 délivre alors au module de compilation 24 une température extérieure corrigée de l'ensoleillement extérieure et du niveau de chambrage du véhicule automobile, c'est-à-dire de la quantité d'énergie calorifique accumulée dans l'habitacle H du véhicule automobile.

Selon le niveau de chambrage évalué, c'est-à-dire selon la différence de température entre l'extérieur et l'intérieur de l'habitacle H, la température extérieure corrigée délivrée par le troisième module de correction 23 est multiplié par un facteur de compensation compris entre 0 et 1.

Par exemple, dans le cas où la différence de température évaluée est inférieure à 5°C, le niveau de chambrage est considéré comme faible. Le niveau de chambrage étant faible, on multiplie la température extérieure corrigée par un facteur nul. En effet, dans le cas d'un véhicule sortant d'un parking couvert, dans lequel l'habitacle n'a pas accumulé d'énergie calorifique induit par les rayons du soleil durant le stationnement, et soumis à un ensoleillement important, la température intérieure diffère très peu de la température extérieure au moment de la sortie du parking. Par conséquent, la contribution de la température extérieure pour l'estimation de la température de confort ressentie par l'utilisateur n'est pas prise en compte. En effet, sa prise en compte modifierait de manière erronée l'estimation de la température de confort, *T_{confort}.*

Dans le cas où la différence de température évaluée est comprise entre 5°C et 20°C, le facteur de compensation est égal à 0,5. Dans le cas où la différence évaluée est supérieure à 20°C, en revanche, le facteur de compensation est égal à 1, la température extérieure corrigée devant être prise complètement en compte.

Plus le niveau de chambrage est important, plus il est important de tenir compte de la contribution de la température extérieure corrigée en fonction l'ensoleillement extérieur pour l'estimation de la température de confort ressentie par l'utilisateur, *T_{confort}.*

Le module de compilation 24 détermine alors une température de confort *T_{confort}* ressentie par l'utilisateur à partir de la température intérieure mesurée, et des températures délivrées par le premier module de correction 21, le second module de correction 22 et le multiplicateur 27. La température de confort, *T_{confort}*, ainsi délivrée par les moyens d'estimation tient compte de l'ensoleillement et du niveau de chambrage du véhicule automobile.

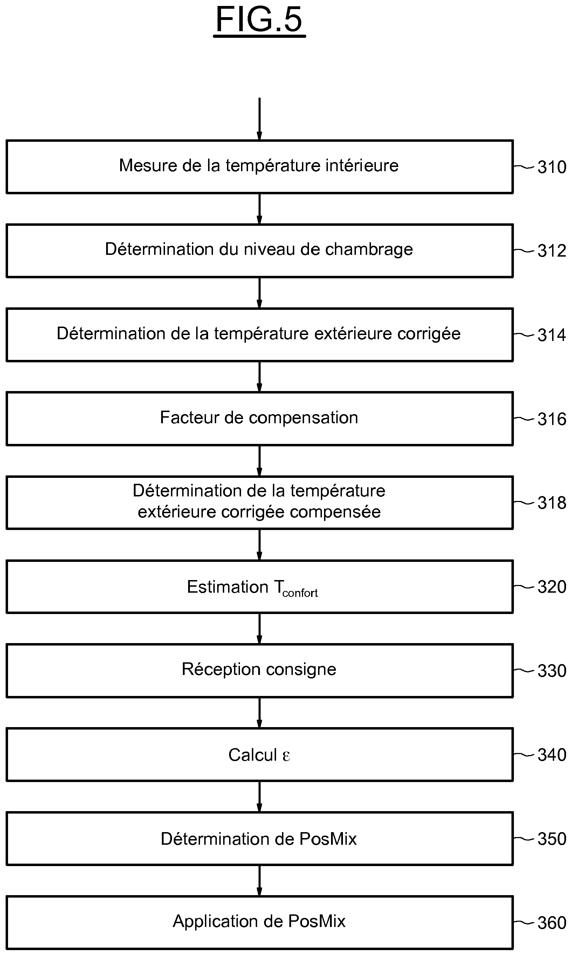

La figure 5 illustre un exemple d'étapes d'un procédé de régulation de la température intérieure de l'habitacle H d'un véhicule automobile, selon un mode de mise en oeuvre.

Dans une première étape 310, on mesure la température intérieure de l'habitacle H à l'aide de la sonde de température 14 située, par exemple, sur le rétroviseur intérieur du véhicule automobile. La sonde de température 14 délivre alors la mesure aux moyens d'estimation 15 qui reçoivent également en entrée des valeurs de paramètres supplémentaires tels que la position des volets de mixage, l'ensoleillement extérieur, la température extérieure au véhicule automobile, la vitesse du véhicule automobile, la température de l'air issu du circuit moteur, et/ou la température de l'air issu du circuit de refroidissement d'air.

Dans une étape suivante 312, on détermine le niveau de chambrage à partir du calcul de la différence entre la température intérieure mesurée dans l'habitacle du véhicule automobile et la température extérieure au véhicule.

Dans une étape suivante 314, on détermine une valeur de la température extérieure corrigée en fonction de la puissance de l'ensoleillement extérieure.

Dans une étape suivante 316, on détermine un facteur de compensation de la température extérieure corrigée à partir du niveau de chambrage déterminé et de la puissance d'ensoleillement extérieur.

Dans une étape suivante 318, on détermine une température extérieure corrigée compensée à partir de la température extérieure corrigée et du facteur de compensation.

Dans une étape suivante 320, on estime la température de confort, *T_{confort}*, ressentie par l'utilisateur à partir de la température intérieure mesurée, de la température extérieure corrigée compensée, de la température moyenne d'air soufflé, et de la température d'air recyclé corrigé de la vitesse du véhicule.

Dans une étape suivante 330, on reçoit une consigne de température de confort, *Consigne,* choisie par l'utilisateur, puis on calcule, dans une étape suivante 340, la différence ε entre la consigne de température de confort, *Consigne,* et la température de confort, *T_{confort}*, estimée.

Dans une étape 350, on détermine un signal de commande *PosMix* de la position du volet de mixage à partir de la différence ε.

Puis, dans une étape 360, on applique le signal de commande *PosMix* au volet de mixage.

Les moyens de régulation des moyens de régulation de la température de confort du système de climatisation selon l'invention permettent d'améliorer la précision de l'estimation de la température de confort ressentie par l'utilisateur grâce à la prise en compte du niveau de chambrage, c'est-à-dire à la quantité d'énergie calorifique accumulée dans l'habitacle du véhicule automobile lors d'un stationnement. Le procédé d'estimation est mis en oeuvre à l'aide de moyens d'estimation réduits et nécessitant une petite taille de codage.

## Revendications

1. Système de climatisation (1) de l'habitacle d'un véhicule automobile, comprenant au moins une soufflante (2) pour entraîner un flux d'air chaud ou froid dans plusieurs zones distinctes de l'habitacle, des éléments (10, 11, 12) de répartition du flux d'air dans lesdites zones, et des moyens de régulation (13) de la température d'air dans chacune desdites zones, les moyens de régulation (13) comportant une sonde de température (14) apte à mesurer une température intérieure de l'habitacle, des moyens d'estimation (15) d'une température de confort (T_{confort}) ressentie par le conducteur comportant un module d'évaluation de l'énergie calorifique accumulée dans l'habitacle du véhicule automobile pendant une période de stationnement, des moyens utilisateur (16) permettant à l'utilisateur d'émettre une consigne de température de confort (Consigne), et des moyens de détermination des commandes des éléments (10, 11, 12) de répartition du flux d'air, **caractérisé en ce que** les moyens d'estimation (15) comprennent un module de correction (23) apte à déterminer une valeur de la température extérieure au véhicule corrigée en fonction de l'ensoleillement mesuré, un module de compensation (26) apte à déterminer un facteur de compensation de la température extérieure corrigée en fonction de l'évaluation de l'énergie calorifique accumulée et de l'ensoleillement mesuré, et un module (27) de détermination de la température extérieure corrigée compensée à partir dudit facteur de compensation et de la température extérieure corrigée.

2. Système selon la revendication 1, dans lequel le module d'évaluation comporte un soustracteur (25) déterminant la différence entre une mesure de la température extérieure au véhicule et la mesure de la température intérieure de l'habitacle.

3. Système selon l'une des revendications 1 à 2, comprenant un ensemble de détermination avec au moins des moyens de mesure de la température d'air soufflés, des moyens de mesure de la quantité d'air recyclé, des moyens de mesure de la vitesse du véhicule, des moyens de mesure de l'ensoleillement, et/ou des moyens de mesure de la température extérieure.

4. Système selon l'une des revendications 1 à 3, comprenant un module (21) de correction de la température d'air soufflé et un module (22) de correction statique de la température d'air recyclé en fonction de la vitesse du véhicule automobile.

5. Procédé de régulation de la température intérieure de l'habitacle d'un véhicule automobile, comprenant la mesure (310) d'une température intérieure de l'habitacle, l'estimation (320) d'une température de confort ressentie par le conducteur en évaluant (312) l'énergie calorifique accumulée dans l'habitacle du véhicule automobile pendant une période de stationnement, la réception (330) d'une consigne de température de confort et la régulation de la température d'air soufflé dans l'habitacle, caractérisé en ce que'on détermine (314) une valeur de la température extérieure au véhicule corrigée en fonction de l'ensoleillement mesuré, on détermine (316) un facteur de compensation de la température extérieure corrigée en fonction de l'évaluation de l'énergie calorifique accumulée et de l'ensoleillement mesuré, on détermine (318) une température extérieure corrigée compensée à partir dudit facteur de compensation et de la température extérieure corrigée..

6. Procédé selon la revendication 5, dans lequel l'énergie calorifique accumulée est évaluée à partir de la différence entre une mesure de la température extérieure au véhicule et la mesure de la température intérieure de l'habitacle.

7. Procédé selon l'une des revendications 5 ou 6, dans lequel la température de confort est estimée à partir de la température intérieure de l'habitacle et d'au moins un paramètre supplémentaire.

8. Procédé selon la revendication 7, dans lequel le paramètre supplémentaire comprend la température d'air soufflé, la vitesse du véhicule, la quantité d'air recyclé, et/ou la température extérieure au véhicule et l'ensoleillement.

## Patentansprüche

1. Klimaanlage (1) für den Fahrgastraum eines Kraftfahrzeugs, die mindestens ein Gebläse (2) zum Leiten eines Kalt- oder Warmluftstroms in mehrere separate Bereiche des Fahrgastraums, Elemente (10, 11, 12) zur Verteilung des Luftstroms in die Bereiche und Mittel (13) zur Regulierung der Temperatur der Luft in jedem der Bereiche umfasst, wobei die Regulierungsmittel (13) einen Temperatursensor (14), der eine Innentemperatur des Fahrgastraums messen kann, Mittel (15) zur Schätzung einer vom Fahrer verspürten Komforttemperatur (T_{Komfort}), die ein Modul zur Einschätzung der während eines Parkzeitraums im Fahrgastraum des Kraftfahrzeugs angestauten Wärmeenergie umfassen, Benutzermittel (16), die einem Benutzer das Ausgeben eines Komforttemperatureinstellwerts gestatten, und Mittel zur Bestimmung der Steuerungen der Elemente (10, 11, 12) zur Verteilung des Luftstroms umfassen, **dadurch gekennzeichnet, dass** die Schätzmittel (15) ein Korrekturmodul (23), das einen Wert der in Abhängigkeit von der gemessenen Sonneneinstrahlung korrigierten Temperatur außerhalb des Fahrzeugs bestimmen kann, ein Ausgleichsmodul (26), das einen Faktor zum Ausgleich der in Abhängigkeit von der Einschätzung der angestauten Wärmeenergie und der gemessenen Sonneneinstrahlung korrigierten Außentemperatur bestimmen kann, und ein Modul (27) zur Bestimmung der auf Basis des Ausgleichsfaktors und der korrigierten Außentemperatur ausgeglichenen korrigierten Außentemperatur umfassen.

2. Anlage nach Anspruch 1, wobei das Einschätzmodul eine Subtraktionsvorrichtung (25) umfasst, die die Differenz zwischen einem Messwert der Temperatur außerhalb des Fahrzeugs und dem Messwert der Innentemperatur des Fahrgastraums bestimmt.

3. Anlage nach einem der Ansprüche 1-2, die eine Bestimmungsanordnung mit mindestens Mitteln zum Messen der Gebläselufttemperatur, Mitteln zum Messen der Umluftmenge, Mitteln zum Messen der Fahrzeuggeschwindigkeit, Mitteln zum Messen der Sonneneinstrahlung und/oder Mitteln zum Messen der Außentemperatur umfasst.

4. Anlage nach einem der Ansprüche 1-3, die ein Modul (21) zur Korrektur der Gebläselufttemperatur und ein Modul (22) zur statischen Korrektur der Umlufttemperatur in Abhängigkeit von der Kraftfahrzeuggeschwindigkeit umfasst.

5. Verfahren zur Regulierung der Innentemperatur des Fahrgastraums eines Kraftfahrzeugs, das Messen (310) einer Innentemperatur des Fahrgastraums, Schätzen (320) einer vom Fahrer verspürten Komforttemperatur durch Einschätzen (312) der während eines Parkzeitraums im Fahrgastraum des Kraftfahrzeugs angestauten Wärmeenergie, Empfangen (330) eines Komforttemperatureinstellwerts und Regulieren der Temperatur der in den Fahrgastraum geblasenen Luft umfasst, **dadurch gekennzeichnet, dass** ein Wert der in Abhängigkeit von der gemessenen Sonneneinstrahlung korrigierten Temperatur außerhalb des Fahrzeugs bestimmt wird (314), ein Faktor zum Ausgleich der in Abhängigkeit von der Einschätzung der angestauten Wärmeenergie und der gemessenen Sonneneinstrahlung korrigierten Außentemperatur bestimmt wird (316), eine auf Basis des Ausgleichsfaktors und der korrigierten Außentemperatur ausgeglichene korrigierte Außentemperatur bestimmt wird (318).

6. Verfahren nach Anspruch 5, wobei die angestaute Wärmeenergie basierend auf der Differenz zwischen einem Messwert der Temperatur außerhalb des Fahrzeugs und dem Messwert der Innentemperatur des Fahrgastraums eingeschätzt wird.

7. Verfahren nach einem der Ansprüche 5 oder 6, wobei die Komforttemperatur auf Basis der Innentemperatur des Fahrgastraums und mindestens eines zusätzlichen Parameters geschätzt wird.

8. Verfahren nach Anspruch 7, wobei der zusätzliche Parameter die Gebläselufttemperatur, die Fahrzeuggeschwindigkeit, die Umluftmenge und/oder die Temperatur außerhalb des Fahrzeugs und die Sonneneinstrahlung umfasst.

## Claims

1. Air-conditioning system (1) for the cabin of a motor vehicle, comprising at least one blower (2) for entraining a hot or cold air flow in several distinct zones of the cabin, elements (10, 11, 12) for distributing the air flow in said zones, and means (13) for regulating the air temperature in each of said zones, the regulating means (13) comprising a temperature probe (14) able to measure an interior temperature of the cabin, means (15) for estimating a comfort temperature (T_{comfort}) experienced by the driver comprising a module for evaluating the calorific energy accumulated in the cabin of the motor vehicle during a parking period, user means (16) allowing the user to issue a comfort temperature setpoint (Setpoint), and means for determining the controls of the elements (10, 11, 12) for distributing the air flow, **characterized in that** the estimating means (15) comprise a correction module (23) able to determine a value of the temperature outside the vehicle, corrected as a function of the measured sunshine, a compensation module (26) able to determine a factor for compensating the exterior temperature corrected as a function of the evaluation of the accumulated calorific energy and of the measured sunshine, and a module (27) for determining the corrected exterior temperature compensated on the basis of said compensation factor and of the corrected exterior temperature.

2. System according to Claim 1, in which the evaluating module comprises a subtractor (25) determining the difference between a measurement of the temperature outside the vehicle and the measurement of the interior temperature of the cabin.

3. System according to either of Claims 1 and 2, comprising a determining assembly with at least blown air temperature measuring means, means for measuring the quantity of recycled air, means for measuring the speed of the vehicle, means for measuring the sunshine, and/or means for measuring the exterior temperature.

4. System according to one of Claims 1 to 3, comprising a module (21) for correcting the temperature of blown air and a module (22) for static correction of the temperature of recycled air as a function of the speed of the motor vehicle.

5. Method for regulating the interior temperature of the cabin of a motor vehicle, comprising the measurement (310) of an interior temperature of the cabin, the estimation (320) of a comfort temperature experienced by the driver by evaluating (312) the calorific energy accumulated in the cabin of the motor vehicle during a parking period, the reception (330) of a comfort temperature setpoint and the regulating of the temperature of air blown into the cabin, **characterized in that** a value of the temperature outside the vehicle, corrected as a function of the measured sunshine, is determined (314), a factor for compensating the exterior temperature corrected as a function of the evaluation of the accumulated calorific energy and of the measured sunshine is determined (316), and a corrected exterior temperature compensated on the basis of said compensation factor and of the corrected exterior temperature is determined (318).

6. Method according to Claim 5, in which the accumulated calorific energy is evaluated on the basis of the difference between a measurement of the temperature outside the vehicle and the measurement of the interior temperature of the cabin.

7. Method according to either of Claims 5 and 6, in which the comfort temperature is estimated on the basis of the interior temperature of the cabin and of at least one additional parameter.

8. Method according to Claim 7, in which the additional parameter comprises the temperature of blown air, the speed of the vehicle, the quantity of recycled air, and/or the temperature outside the vehicle and the sunshine.
